# EUROPEAN PATENT SPECIFICATION

(11) **EP 3 869 676 B1**
(45) Date of publication and mention of the grant of the patent: **07.01.2026**
(21) Application number: 20158327.5
(22) Date of filing: 19.02.2020
(51) Int. Cl.: H02M 1/32, H02M 3/158, H02M 1/00, H02H 7/122, H02M 1/44, H02M 7/48, H02H 3/07, H02H 7/12

(54) **DC/DC CONVERTER CIRCUIT**
GLEICHSPANNUNGSWANDLERSCHALTUNG
CIRCUIT DE CONVERTISSEUR CC/CC

(43) Date of publication of application: 25.08.2021
(73) Proprietor: Fronius International GmbH, 4643 Pettenbach (AT)
(72) Inventor: Mörtenhuber, Martin, 4643 Pettenbach (AT); Staudinger, Bernhard, 4643 Pettenbach (AT); Wallisch, Gerhard, 4643 Pettenbach (AT)
(74) Representative: Bratovic, Nino Maria

(56) References cited:
- CN-A- 110 719 038
- US-A1- 2012 032 660
- US-A1- 2017 093 145
- US-B2- 8 913 363
- PRIYADARSHINI K ET AL: "Reliability of DC-DC converters used as MPPT in grid connected photovoltaic systems", 2016 INTERNATIONAL CONFERENCE ON CIRCUITS, CONTROLS, COMMUNICATIONS AND COMPUTING (I4C), IEEE, 4 October 2016 (2016-10-04), pages 1 - 6, XP033157925, DOI: 10.1109/CIMCA.2016.8053297
- TEXAS INSTRUMENTS: "Improve Power Converter Reliability Using Hiccup-Mode Current Limiting", 1 January 2011 (2011-01-01), pages 1 - 9, XP093288631, Retrieved from the Internet <URL:https://www.ti.com/lit/an/snva604/snva604.pdf>

## Description

The invention relates to a surge test tolerant overcurrent protection for a direct current/direct current DC/DC converter.

In general, a DC/DC converter is used to convert an input voltage level to an output voltage level. The output voltage level can be higher or lower than the input voltage depending on the use case.

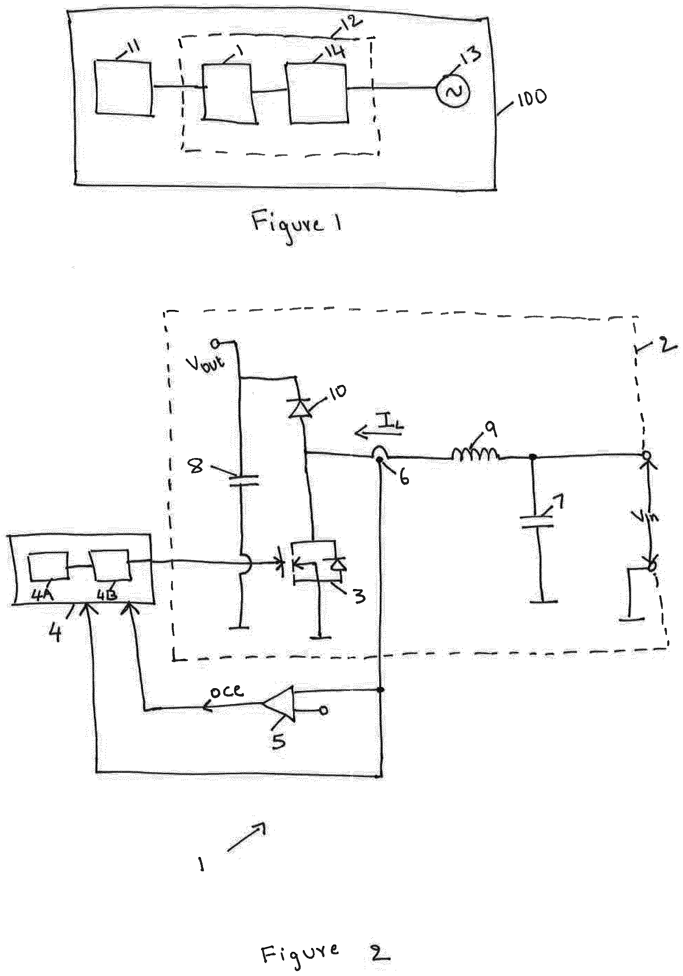

A DC/DC converter circuit can form part of a photovoltaic system as illustrated in Fig. 1. A photovoltaic system 100 comprises a photovoltaic power generator 11 including one or more photovoltaic modules which supply a low DC voltage to the input of the DC/DC converter circuit 1 as illustrated in Fig. **1****.** The DC/DC converter circuit 1 is provided to boost a low DC voltage for generating a sufficiently high DC voltage as illustrated in Fig. 1. The DC voltage output of the DC/DC converter circuit 1 can be supplied to a DC/AC converter circuit 14 connected to a power supply grid 13.

The DC/AC converter circuit 14 is adapted to convert the DC current into an alternating current AC which can be fed into the power supply grid 13. The DC/DC converter circuit 1 and the DC/AC converter circuit 14 together form an inverter 12. In another embodiment, each photovoltaic module of the photovoltaic power generator 11 is connected to an individual DC/DC converter circuit **1.** The photovoltaic power generator 11 in turn is connected to the inverter 12 comprising the DC/DC converter circuit 1 and the DC/AC converter circuit 14.

The described photovoltaic system 100 should not be construed to limit the present invention to only the explicitly described system. For example, any power generator or an energy storage unit or any combination thereof may supply an input to the DC/DC converter circuit 1 of the inverter 12.

Control systems and inverters in residential or small commercial photovoltaic systems are subject to residential or commercial electromagnetic emission limits as well as immunity requirements.

A surge test provides a measure of a performance of the inverter 12 regarding surges caused due to over voltage. During a surge test, a device under test, in this case, the inverter 12, is subjected to a surge pulse or a series of surge pulses. The surge pulse refers to a high voltage pulse. The surge test is used as a reference for evaluating the immunity of the inverter 12 when subjected to the surge pulse. The surge test enables a tester to determinate a susceptibility of the inverter 12 to damage caused by the surge pulse or a series of surge pulses.

Certain industry specifications, for example, electromagnetic compatibility EMC standards, require the inverter 12 to satisfy requirements representing essential EMC immunity requirements. The surge test is generally done on the inverter 12 to meet the requirements of the industry specifications. For instance, a tool to generate a surge pulse is used to perform the surge test and to categorize the inverter 12 based on measurements provided by the tool.

In an example, during an execution of the surge test for certain industry specifications, the inverter 12 is required to be in continuous operation during the execution of the surge test. In other words, the standards require the inverter 12 to be in an operating mode during the surge test of the inverter 12. That is, the inverter 12 should not be disconnected from the grid 13 during the execution of the surge test.

When the inverter 12 of the photovoltaic system 100 is subjected to the surge test, the surge pulses generated during the surge test may cause overcurrent events in the DC/DC converter circuit 1 of the photovoltaic system 100. An overcurrent detector of the DC/DC converter circuit 1 would detect the overcurrent events resulting in a change in the operating state of the inverter 12. In other words, the overcurrent detector of the DC/DC converter circuit 1 would switch off the inverter 12. But switching off the inverter 12 is undesirable during the surge test.

US 2017/093145 A1 discloses a semiconductor device comprising an overcurrent protection circuit that combines a pulse-by-pulse method, which is triggered by the surpassing of a first threshold value, and a second overcurrent protection operations based on a time latch, which sets in when a second voltage threshold is reached.

US 8 913 363 B2 discloses an overcurrent protection circuit which comprises a controller that operates on a switch, turning it on and off with the help of a counter, wherein when an overcurrent event is detected a count up follows, otherwise a count down occurs.

US 2012/032660 A1 discloses a switching power source with a high-side switch, which in the event of an overcurrent is turned off for a predetermined time.

Priyadarshini et al: "Reliability of DC-DC converters used as MPPT in grid connected photovoltaic systems", 2016 International Conference on Circuits, Controls, Communications and Computing (I4C), IEEE, XP033157925, is a study published in 2016, which assesses the reliability of different topologies of DC/DC converters. This is achieved by determining the failure rate of the different electrical components **(e.g.,** semiconductors, coils, capacitors, resistances and diodes) of the different topologies.

CN 110 719 038 A deals with a configuration of DC/DC inverters that serve to prevent excessive power losses in a photovoltaic power generation system during a current-vs.-voltage curve scan (IV curve scanning). This is achieved with at least two DC/DC inverters, one of which is designed to scan the IV curve and the other to provide power to compensate for the power losses associated with IV curve scanning.

Texas Instruments: "Improve Power Converter Reliability Using Hiccup-Mode Current Limiting", XP093288631, describes a "hiccup" mode in which different pulses are provided. In the event of overcurrent, a capacitor is charged and a sleep mode is triggered. Two voltage thresholds determine when the sleep mode is entered and exited.

Accordingly, it is an object of the present invention to provide a DC/DC converter circuit 1 and a corresponding method which allows execution of a surge test, wherein the DC/DC converter circuit 1 is able to suppress any overcurrent events caused due to surge pulses during the surge test without interrupting the overcurrent protection of the DC/DC converter circuit 1.

This object is achieved according to a first aspect of the present invention by an inverter comprising a DC-DC converter and an over-current detector according to claim 1.

In a possible embodiment of the DC/DC converter circuit 1 according to the first aspect of the present invention, the PWM controller comprises a timer provided to measure whether the predefined waiting period after the overcurrent event, oce, has expired.

In a further possible embodiment of the DC/DC converter circuit 1 according to the first aspect of the present invention, the PWM controller further comprises an overcurrent event counter adapted to count a number of overcurrent events, oce, signaled by the overcurrent detector to the PWM controller.

In a further possible embodiment of the DC/DC converter circuit 1 according to the first aspect of the present invention, the PWM controller is adapted to automatically trigger a failure handling procedure if the number of overcurrent events, oce, counted by the overcurrent event counter reaches a predefined threshold value.

In a further possible embodiment of the DC/DC converter circuit 1 according to the first aspect of the present invention, the overcurrent event counter is configured to be reset or decremented after a predefined time period.

In a further possible embodiment of the DC/DC converter circuit 1 according to the first aspect of the present invention, the overcurrent detector comprises a comparator which is adapted to signal an overcurrent event, oce, if a measured current flowing through the component of the analog circuitry of the DC/DC converter circuit 1 exceeds a predefined reference value.

In a further possible embodiment of the DC/DC converter circuit 1 according to the first aspect of the present invention, the analog circuitry of the DC/DC converter circuit 1 comprises a component, which is a coil, through which a current flowing is measured to detect an overcurrent event, oce; an input capacitor at an input side of the DC/DC converter circuit 1 receiving the analog input voltage; and an output capacitor at an output side of the output of the DC/DC converter circuit 1.

In a possible embodiment of the DC/DC converter circuit 1 according to the first aspect of the present invention, the input capacitor and the output capacitor of the analog circuitry of the DC/DC converter circuit 1 are connected via the component, in particular a coil, and a diode.

In a further possible embodiment of the DC/DC converter circuit 1 according to the first aspect of the present invention, the finite state machine is implemented such that, in the normal state of the finite state machine the generated PWM set signal is supplied by the PWM controller to the gate of the semiconductor switch; and in an overcurrent state of the finite state machine the semiconductor switch is switched by the PWM controller into the switched-off state to provide overcurrent protection to the DC/DC converter circuit 1.

In a further possible embodiment of the DC/DC converter circuit 1 according to the first aspect of the present invention, the number of state changes of the state machine of said PWM controller are counted by incrementing a state change counter.

In a further possible embodiment of the DC/DC converter circuit 1 according to the first aspect of the present invention, the PWM controller is deactivated if the value of the state change counter exceeds a predefined threshold value.

In a further possible embodiment of the DC/DC converter circuit 1 according to the first aspect of the present invention, the state change counter is reset or decremented after a predefined time period.

In a further possible embodiment of the DC/DC converter circuit 1 according to the first aspect of the present invention, the input voltage is received by the DC/DC converter circuit 1 from at least one photovoltaic module connected to an input of said DC/DC converter circuit 1.

In a further possible embodiment of the DC/DC converter circuit 1 according to the first aspect of the present invention, the output voltage is output at the DC/DC converter circuit 1 to a DC/AC converter circuit adapted to convert the output voltage into an AC voltage supplied to a power supply grid 13.

The invention further provides according to a further aspect a surge test tolerant DC/DC converter circuit 1 according to the first aspect of the present invention used for converting an input voltage provided by a photovoltaic array into an output voltage supplied to a DC/AC converter circuit of the photovoltaic system 1.

The invention further provides according to a further aspect a method for providing a surge test resilient overcurrent protection for a DC/DC converter circuit 1 which converts an input voltage into an output voltage, with the features of claim 13.

In the following, possible embodiments of the different aspects of the present invention are described in more detail with reference to the enclosed figures.
- Fig. 1: shows a conventional photovoltaic system according to the state of the art;
- Fig. 2: shows a possible exemplary embodiment of a DC/DC converter circuit according to the first aspect of the present invention;
- Fig. 3: shows a state diagram of a possible exemplary embodiment of a state machine as implemented in a PWM controller of the DC/DC converter circuit illustrated in Fig. 2;
- Fig. 4: shows a flowchart of a method for providing a surge test resilient overcurrent protection to a DC/DC converter according to the present invention;
- Fig. 5: shows a further possible exemplary embodiment implementation with a high-side switch controlled by a PWM controller according to the present invention;
- Fig. 6: shows a further exemplary embodiment of an analog DC/DC circuitry within a DC/DC converter circuit according to the present invention.

Fig. 2 illustrates a possible exemplary embodiment of a DC/DC converter circuit 1 according to the first aspect of the present invention. In the illustrated embodiment, the DC/DC converter circuit 1 comprises an analog circuitry 2 with a semiconductor switch 3 having a gate controlled by a PWM controller 4 of the DC/DC converter circuit 1.

The DC/DC converter circuit 1 further comprises an overcurrent detector 5 which in the illustrated exemplary embodiment comprises a comparator. The DC/DC converter circuit 1 according to the first aspect of the present invention as illustrated in Fig. 2 is adapted to convert an input voltage Vᵢₙ into an output voltage Vₒᵤₜ. The PWM controller 4 is adapted to provide a PWM set signal applied to the gate of the semiconductor switch 3 of the DC/DC converter circuit 1 for controlling the ratio between the output voltage Vₒᵤₜ and the input voltage Vᵢₙ.

In the illustrated exemplary embodiment, the DC/DC converter circuit 1 comprises a boost converter which is used to create an output voltage Vₒᵤₜ that is higher than the input voltage Vᵢₙ. Such a DC/DC boost converter 1 can suffer inter alia from a vulnerability to a short circuit load. The output voltage Vₒᵤₜ output by the analog circuitry 2 of the DC/DC converter circuit 1 can be controlled through a closed feedback loop for controlling a duty cycle D, i.e. a percentage of time that the semiconductor switch 3 is switched on. The transfer functional ratio between the output voltage Vₒᵤₜ and the input voltage Vᵢₙ is: R = Vₒᵤₜ / Vᵢₙ = 1 /(1-D),
wherein Vₒᵤₜ is the output voltage,
Vᵢₙ is the input voltage and
D is the duty cycle.

The PWM controller 4 is adapted to provide a PWM set signal applied to the gate of the semiconductor switch 3 of the DC/DC converter circuit 1 for controlling the ratio between the output voltage Vₒᵤₜ and the input voltage Vᵢₙ.

The overcurrent detector 5 is adapted to detect an overcurrent flowing through a component of the DC/DC converter circuit 1 and to signal the detected overcurrent event, oce, to the PWM controller 4. The PWM controller 4 is adapted to switch the semiconductor switch 3 into a protection state in response to the signaled overcurrent event, oce, to provide overcurrent protection for the DC/DC converter circuit 1. In the illustrated exemplary embodiment of Fig. 2, the PWM controller 4 is adapted to switch off the semiconductor switch 3 if the PWM controller 4 receives a signaled overcurrent event, oce, from the overcurrent detector 5.

In the illustrated embodiment, the analog circuitry 2 of the DC/DC converter circuit 1 comprises a coil 9 with an inductance L through which a current I_{L} flows. This current I_{L} is measured by a sensor element 6 as illustrated in Fig. 2 and supplied to an input of the comparator 5. If the measured current I_{L} exceeds the predefined threshold, the comparator 5 of the overcurrent detector signals an overcurrent event, oce, to the PWM controller 4. In response to the received overcurrent event, oce, the PWM controller 4 switches the semiconductor switch 3 into the protection state, i.e. in the switched off state. After the overcurrent detector 5 stops to signal the overcurrent event, oce, to the PWM controller 4, the semiconductor switch 3 is retained by the PWM controller 4 in the protection state, i.e. the switched off state, until a next signal edge of the PWM signal occurs or until a predefined waiting period has expired which is longer than a PWM set signal cycle generated by a PWM set signal generator 4A of the PWM controller 4.

According to the invention, the PWM controller 4 comprises a timer adapted to measure whether a predefined waiting period after the overcurrent event, oce, has expired or not. The predefined waiting period is set to be longer than a period of the PWM set signal generated by a PWM signal generator 4A of the PWM controller 4. In another embodiment, the predefined waiting period is set to be longer than an overcurrent event, oce, caused by a surge pulse during a surge test.

In the illustrated embodiment of Fig. 2, the PWM controller 4 comprises a PWM signal generator 4A adapted to generate a PWM set signal which is supplied to a block 4B providing a safety function. In a normal state of the DC/DC converter circuit 1, the PWM set signal supplied to the gate of the semiconductor switch 3 corresponds to the PWM set signal provided by the PWM signal generator 4A. The PWM set signal generator 4A forms part of a feedback loop and regulates a duty cycle D of the PWM signal in response to the measured coil current I_{L} measured by the sensor element 6. The safety function block 4B provides the overcurrent protection of the DC/DC converter circuit 1 in case of an overcurrent event, oce.

In a possible embodiment, the PWM controller 4 can further comprise an overcurrent event counter adapted to count a number of overcurrent events, oce, signaled by the overcurrent detector 5 to the PWM controller 4. If the value of the over-current event counter exceeds a predefined threshold value, a failure can be detected triggering a safety mechanism. For example, an inverter 12 can be switched off if the overcurrent event counter reaches the threshold value. In a possible embodiment, the overcurrent event counter can be reset or decremented after a predefined time period. This is used to prevent triggering of a failure protection mechanism in case of such overcurrent events widespread over time.

In a possible embodiment, the PWM controller 4 is adapted to automatically switch the semiconductor switch 3 into the protection state if the number of overcurrent events, oce, counted by the overcurrent event counter reaches a predefined threshold value within a predetermined time period, thereby preventing damage to the switching element 3. Thus, a failure can be detected, thereby triggering a safety mechanism.

The overcurrent detector 5 comprises a comparator which signals an overcurrent event, oce, if a measured current I_{L} flowing through the component 9 of the DC/DC converter circuit 1 exceeds a predefined reference value. As illustrated in Fig. 2, the DC/DC converter circuit 1 comprises an analog circuitry 2 comprising as a component, a coil 9, through which an electrical current I_{L} is flowing and measured by the sensor element 6 to detect an overcurrent event, oce, by the overcurrent detector 5. In alternative embodiments, the component used to measure a current I_{L} flowing through the analog circuitry 2 is a resistor.

In the illustrated embodiment of Fig. 2, the analog circuitry 2 comprises at the input side an input capacitor 7 and at the output side an output capacitor 8. The input capacitor 7 and the output capacitor 8 of the analog circuitry 2 of the DC/DC converter circuit 1 are connected via the coil 9 and a diode 10 as shown in Fig. 2. The diode 10 represents a high-side switch. The semiconductor switch 3 represents a low-side switch. As shown in Fig. 2, the semiconductor switch 3 is a metal-oxide-semiconductor field-effect transistor MOSFET. The MOSFET 3 may comprise an additional circuitry to bias a gate of the switch 3. An n channel MOSFET requires its gate voltage to be higher than its source terminal. This may require a gate driver IC or a charge pump. A p channel MOSFET requires that its gate is pulled below its source terminal. If the input voltage Vᵢₙ is sufficiently high, the gate of the p channel MOSFET can be pulled to ground to turn the MOSFET on. For this reason, using a p channel MOSFET is preferred as it is simpler to be implemented.

In a possible embodiment of the DC/DC converter circuit 1 as illustrated in Fig. 2, the output voltage Vₒᵤₜ can be output at the output side of the DC/DC converter circuit 1 to a DC/AC converter circuit 14 adapted to convert the output voltage Vₒᵤₜ into an AC voltage supplied to a power supply grid 13. F

Further, the input voltage Vᵢₙ at the input side of the DC/DC converter circuit 1 is connected to at least one photovoltaic module connected to the input side of the DC/DC converter circuit 1.

In a possible embodiment, the overcurrent event counter is incremented every time the state machine of the PWM controller 4 changes in the first transition T1 from the normal state I into the overcurrent state II. In other words, the minimum time period to increment the overcurrent event counter is one PWM set signal cycle.

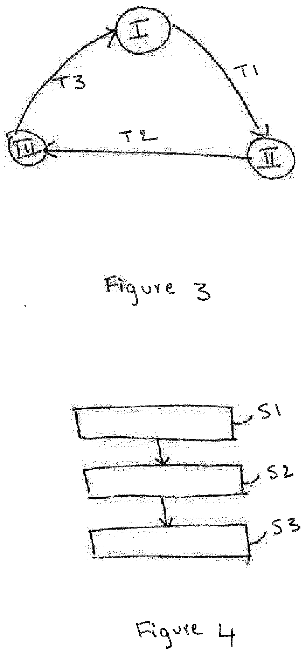

In a possible embodiment, the PWM controller 4 comprises an implemented state machine as illustrated in the state diagram of Fig. 3. In the illustrated exemplary embodiment, the PWM controller 4 comprises an implemented state machine with three different states. The state machine comprises a behavior model. Since the number of states of the state machine is finite it is also called a finite state machine FSM. A finite state machine FSM can change from one state to another state in response to external inputs or if one or more conditions are satisfied. A change from one state to another is called a transition. A finite state machine FSM is defined by a list of its states, its initial state and the conditions for each transition.

In the illustrated embodiment of Fig. 3, the PWM controller 4 comprises a normal state I where the generated PWM set signal is applied by the PWM controller 4 to the gate of the semiconductor switch 3.

The implemented state machine further comprises an overcurrent state II where the semiconductor switch 3 is switched into the protection state by the PWM controller 4 to provide overcurrent protection to the DC/DC converter circuit 1.

The implemented state machine further comprises a waiting state III where the semiconductor switch 3 is kept in the protection state until the next rising signal edge of the PWM signal occurs or a predefined waiting period has expired (timeout = 1). In the illustrated state machine, there are three main transitions T (T1, T2, and T3) between the three states of the finite state machine FSM.

If the state machine of the PWM controller 4 is in the normal state I and an overcurrent event, oce, is signaled by the overcurrent detector 5 to the PWM controller 4, then the state machine of the PWM controller 4 changes in a first transition T1 from the normal state I into the overcurrent state II.

If the state machine of the PWM controller 4 is in the over-current state II and the overcurrent detector 5 stops to signal an overcurrent event, oce, to the PWM controller 4, then the state machine of the PWM controller 4 changes in the second transition T2 from the overcurrent state II to the waiting state III.

Finally, if the state machine of the PWM controller 4 is in the waiting state III and the next signal edge, i.e. rising signal edge of the PWM set signal occurs or the predefined waiting period has expired (timeout = 1), then the state machine of the PWM controller 4 changes in a third transition T3 from the waiting state III to the normal state I as also illustrated in Fig. 3.

In a possible implementation, a number of transitions T of the state machine of the PWM controller 4 can be counted by incrementing a state change counter of the PWM controller 4 at each transition T.

Fig. 4 shows a flowchart of a method for providing a surge test resilient overcurrent protection for a DC/DC converter circuit 1 according to the invention, which converts an input voltage Vᵢₙ into an output voltage Vₒᵤₜ. In the illustrated embodiment, the method comprises three main steps S1, S2, S3.

In a first step S1, a PWM set signal is applied to a gate of a semiconductor switch 3 of the DC/DC converter circuit 1 for controlling a ratio between the output voltage Vₒᵤₜ and the input voltage Vᵢₙ.

In a further step S2, the semiconductor switch 3 is switched into a protection state to provide overcurrent protection if an overcurrent event oce is detected at the DC/DC converter circuit 1.

In a further step S3, the semiconductor switch 3 is kept in the protection state until a next signal edge of the generated PWM set signal occurs or until a predefined waiting period has expired. According to the invention, the predefined waiting period is defined to be longer than a PWM set signal cycle generated by a PWM set signal generator 4A of the PWM controller 4. Here, it should be understood that the invention can be used with any number of different topologies. During a normal state of the DC/DC converter circuit 1, unwanted overcurrent events, oce, may occur if the PWM controller 4 cannot track a fast change in the input voltage V_{in,}, for example, as it may happen during a surge test. A possible way to handle such unwanted overcurrent events, oce, is to switch off the semiconductor switch 3 only when the current I_{L} exceeds a threshold value.

Further, the overcurrent event counter is also implemented which interrupts the operation of the DC/DC converter circuit 1 only after a predetermined number of edges of an overcurrent signal representing the overcurrent event, oce. However, this has the drawback that a maximal frequency of the over-current signal edges are only defined by means of the hysteresis of the overcurrent comparator 5. As a consequence, the maximal admissible number of overcurrent events, oce, has to be set very high to prevent a switching off of the inverter 12, if an oscillation of the coil current, I_{L}, occurs. But, frequent fluctuations in the measurement of current I_{L}, for instance, due to electromagnetic disturbances of the current sensor by magnetic fields generated by currents during a surge test, can enhance this problem.

Accordingly, the present invention provides the advantage of limiting a switching frequency the semiconductor switch 3 in combination with the overcurrent event counter adapted to count a number of overcurrent events, oce, signaled by the overcurrent detector 5 to the PWM controller 4.

In other words, the invention provides with an option of defining a predefined minimal period for neglecting disturbance caused during the surge test which may lead to an unwanted switching off of the inverter 12. This means that a sequence of overcurrent events, oce, can deliberately be ignored until a predefined minimal period expires. During the predefined minimal period, the semiconductor switch 3 is operated at a predefined switching frequency and maximum current as in a normal state of the DC/DC converter circuit 1.

This is achieved by maintaining the semiconductor switch 3 in the switched off state even after the overcurrent event, oce, is no longer signaled by the overcurrent detector 5 until a next leading edge of the PWM set signal is recognized or a predefined waiting period which is longer than the period of the PWM set signal has expired.

The switching of the semiconductor switch 3 is synchronized with the PWM set signal. As soon as the effects, for example, fluctuations in current across the coil 9, of the surge event subside, the DC/DC converter circuit 1 can be again operated with the correct duty cycle.

In case of a boost mode of operation of the DC-DC converter circuit 1, the semiconductor switch 3 is in the switched off state even after the overcurrent event, oce, is no longer signaled by the overcurrent detector 5 until a next leading edge of the PWM set signal is recognized.

In case of a buck mode of operation of the DC-DC converter circuit 1, the semiconductor switch 3 is in the switched off state even after the overcurrent event, oce, is no longer signaled by the overcurrent detector 5 until a next leading edge of the PWM set signal is recognized.

In a specific case of a buck mode of operation of the DC-DC converter circuit 1, with a 100% duty cycle D of the PWM set signal admissible, the semiconductor switch 3 is continued to be maintained in the switched off state after the overcurrent event, oce, until the predefined waiting period has expired. This is because, in a normal state, the signal edges of the PWM set signal do not occur. When no change in the state of the PWM set signal occurs during the predefined waiting period, the state machine of the PWM controller 4 changes in a third transition (T3) from the waiting state to the normal state.

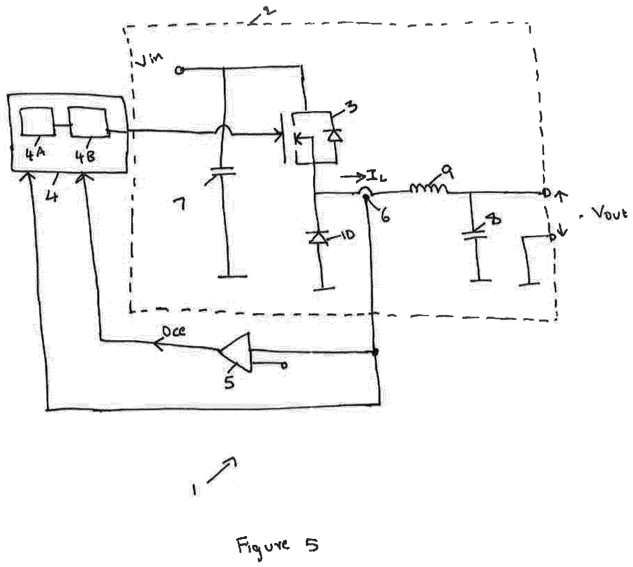

Fig. 5 illustrates a buck mode of operation of the DC-DC converter circuit 1, with the switching element 3 provided on a high-side of the DC-DC converter circuit 1. Fig. 5 illustrates a possible exemplary implementation with a high-side switch 3 controlled by a PWM controller 4. In such a case, a timer is provided to calculate the predefined waiting period in the PWM controller 4. The semiconductor switch 3 is continued to be maintained in the switched off state after the overcurrent event, oce, until the predefined waiting period has expired. That is, a transition T3 from the waiting state III to the normal state I is performed.

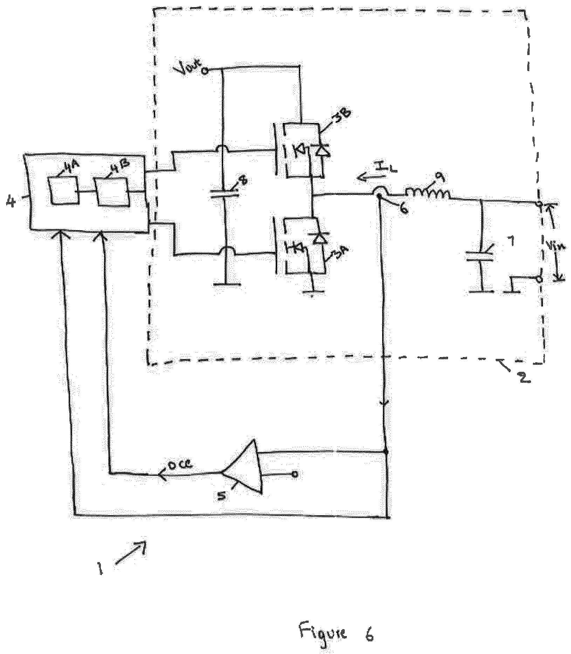

Fig. 6 illustrates a possible exemplary implementation for circuit 1 referred to as a bidirectional DC/DC converter circuit 1. However, it is to be noted that the bidirectional DC/DC converter circuit 1 is not limited to the explicitly described structure as shown in Fig. 6 and can be modified based on the application and usage of the bidirectional DC/DC converter circuit 1. The semiconductor switch 3A represents a low-side switch and the semiconductor switch 3B represents a high-side switch. In the bidirectional DC/DC converter circuit 1, the transition T3 from the waiting state III to the normal state I due to detection of an edge in the PWM set signal is delayed by about half of the pulse width of the PWM set signal. As a result, a first pulse after entering the normal state I is narrowed to approximately half of a PWM set signal pulse width. Therefore, a smaller current change as a result of the shorter first PWM pulse transmitted by the PWM controller 4 reduces the probability of further overcurrent events, oce.

In case of a bidirectional mode of operation of the DC/DC converter circuit 1 with 100% duty cycle for the high-side switch 3B, a timer is provided to perform transition T3 from the waiting state III to the normal state I after a predefined waiting period, which is longer than a period of the PWM set signal, if no edge in the PWM set signal occurs.

In a possible embodiment, the transitions T of the state machine are counted by a state change counter. If a predefined threshold value is reached by the state change counter, a failure can be detected and a failure handling mechanism can be triggered. For instance, an inverter 12 can be switched off by the PWM controller 4 once the predefined threshold value is reached. To prevent unnecessary switching off of the inverter 12 due to widespread overcurrent events, oce, the algorithm resets the state change counter regularly and/or decrements the state change counter at fixed time periods to "forget" single widespread overcurrent events. Here, widespread overcurrent events refer to the overcurrent events, oce, occurring at different points in time spread across a wide time range.

## Claims

1. An inverter (12) comprising a direct current/direct current, DC/DC, converter circuit (1) for converting an input voltage, Vᵢₙ, of at least one photovoltaic module into an output voltage, Vₒᵤₜ, and a DC/AC converter circuit (14) adapted to convert the output voltage, Vₒᵤₜ, into an AC voltage supplied to a power supply grid (13), said DC/DC converter circuit (1) comprising:
- an input side for receiving the input voltage, Vᵢₙ, from at least one photovoltaic module connectable to the input side of said DC/DC converter circuit (1),
- an output side, for outputting the output voltage, Vₒᵤₜ, to the DC/AC converter circuit (14),
- a pulse width modulation PWM controller (4) adapted to provide a PWM set signal applied to a gate of a semiconductor switch (3) of said DC/DC converter circuit (1) for controlling a ratio between the output voltage, Vₒᵤₜ, and the input voltage, Vin,
the PWM controller (4) comprising a finite state machine, and
- an overcurrent detector (5) adapted to detect an overcurrent flowing through a component of the DC/DC converter circuit (1) and to signal the detected overcurrent event, oce, to the PWM controller (4) which is adapted to switch the semiconductor switch (3) into a switched-off state in an over-current state (II) of the finite state machine of the PWM controller (4) in response to the signalled overcurrent event, oce, to provide overcurrent protection for the DC/DC converter circuit (1),
wherein the switching of the semiconductor switch (3) is synchronized with the PWM set signal,
wherein after the overcurrent event, oce, stops being signalled to the PWM controller (4), the PWM controller (4) is configured to retain the semiconductor switch (3) in the switched-off state in a waiting state (III) of the finite state machine with a predefined waiting period, and
in case of a 100% duty cycle of the PWM set signal being admissible, when no change in the state of the PWM set signal occurs during the predefined waiting period, which is longer than a PWM set signal cycle generated by a PWM set signal generator (4A) of the PWM controller (4), the finite state machine of the PWM controller (4) is configured to change from the waiting state (III) to a normal state (I) of the finite state machine, after expiration of the predefined waiting period,
otherwise, the PWM controller (4) is configured to retain the semiconductor switch (3) in the switched-off state in the waiting state (III) of the finite state machine until a next signal edge of the PWM signal occurs.

2. The inverter (12) according to claim 1, wherein the PWM controller (4) comprises a timer adapted to measure whether the predefined waiting period after the overcurrent event, oce, has expired.

3. The inverter (12) according to claim 1 or 2 wherein the PWM controller (4) further comprises an overcurrent event counter adapted to count a number of overcurrent events, oce, signaled by the overcurrent detector (5) to the PWMcontroller (4).

4. The inverter (12) according to claim 3 wherein the PWM controller (4) is adapted to automatically trigger a failure handling procedure if the number of overcurrent events, oce, counted by the overcurrent event counter reaches a predefined threshold value.

5. The inverter (12) according to claim 3 or claim 4 wherein the overcurrent event counter is configured to be reset or decremented after a predefined time period.

6. The inverter (12) according to any of the preceding claims 1 to 5 wherein the overcurrent detector (5) comprises a comparator which is configured to signal the overcurrent event, oce, if a measured current flowing through the component of the DC/DC converter circuit (1) exceeds a predefined reference value.

7. The inverter (12) according to any of the preceding claims 1 to 6 wherein the DC/DC converter circuit 1 comprises
an analog circuitry (2) comprising as the component, a coil (9), through which a current is flowing and measured to detect an overcurrent event, oce,
an input capacitor (7) at the input side of the DC/DC converter and
an output capacitor (8) at the output side of the DC/DC converter.

8. The inverter (12) according to claim 7 wherein the component of the analog circuitry (2) comprises the coil (9),
wherein the input capacitor (7) and the output capacitor (8) of the analog circuitry (2) of the DC/DC converter circuit (1) are connected via the coil (9) and a diode (10).

9. The inverter (12) according to any of the preceding claims 1 to 8 wherein the finite state machine is implemented such that,
in the normal state (I) of the finite state machine the generated PWM set signal is applied by the PWM controller (4) to the gate of the semiconductor switch (3), and
in an overcurrent state (II) of the finite state machine the semiconductor switch (3) is switched into the switched-off state by the PWM controller (4) to provide overcurrent protection.

10. The inverter (12) according to claim 9 wherein a number of transitions (T) between states (I, II, III) of the finite state machine of the PWM controller (4) are counted by incrementing a state change counter and the PWM controller (4) is configured to trigger a failure handling procedure if the value of the finite state change counter exceeds a predefined threshold value.

11. The inverter (12) according to claim 10 wherein the state change counter of the PWM controller (4) is configured to be reset or decremented after a predefined time period.

12. The inverter (12) according to any of the preceding claims wherein the DC/DC converter circuit (1) is a surge test tolerant DC/DC converter circuit (1) for converting the input voltage, Vᵢₙ, into the output voltage, Vₒᵤₜ,
wherein the overcurrent detector (5) is adapted to detect an overcurrent flowing through a component of the DC/DC converter circuit (1) and to signal the detected overcurrent event, oce, to the PWM controller (4) which is configured to switch the semiconductor switch (3) into the switched-off state in response to the signaled overcurrent event, oce, to provide a surge test resilient overcurrent protection for the DC/DC converter circuit (1), where any overcurrent events caused due to surge pulses during a surge test are suppressed without interrupting the overcurrent protection of the DC/DC converter circuit (1).

13. A method for providing a surge test resilient overcurrent protection for an inverter (12) as claimed in any of the preceding claims comprising the DC/DC converter circuit (1) which converts an input voltage, Vᵢₙ, of at least one photovoltaic module into an output voltage, Vₒᵤₜ, wherein the DC/AC converter circuit (14) converts the output voltage, Vₒᵤₜ, into an AC voltage to be supplied to a power supply grid (13), the method comprising the steps of:
- generating (S1) a PWM set signal applied to a gate of a semiconductor switch (3) of said DC/DC converter circuit (1) for controlling a ratio between the output voltage, Vₒᵤₜ, to be converted into an AC voltage to be supplied to a power grid (13) and the input voltage, Vᵢₙ of at least one photovoltaic module;
- switching (S2) the semiconductor switch (3) into a switched-off state in an over-current state (II) of a finite state machine to provide overcurrent protection if an overcurrent event, oce, in the DC/DC converter circuit (1) is detected,
wherein the switching of the semiconductor switch (3) is synchronized with the generated PWM set signal; and
- retaining (S3) the semiconductor switch (3) in the switched-off state in a waiting state (III) of the finite state machine with a predefined waiting period after the overcurrent event, oce, stops being signalled, wherein
in case of a 100% duty cycle of the PWM set signal being admissible, when no change in the state of the PWM set signal occurs during the predefined waiting period, which is longer than a PWM set signal cycle of the PWM set signal, the finite state machine changes from the waiting state (III) to a normal state (I) of the finite state machine, after expiration of the predefined waiting period, and
otherwise, the semiconductor switch (3) retains the semiconductor switch (3) in the switched-off state in the waiting state (III) of the finite state machine until a next signal edge of the generated PWM set signal occurs.

14. The method as claimed in claim 13, wherein the step of switching (S2) the semiconductor switch (3) into the switched-off state comprises:
- switching (S2) the semiconductor switch (3) into the switched-off state to provide overcurrent protection if an overcurrent event, oce, in the DC/DC converter circuit (1) is detected by an overcurrent detector (5) to provide a surge test resilient overcurrent protection for the DC/DC converter circuit (1), where any overcurrent events caused to surge pulses during a surge test are suppressed without interrupting the overcurrent protection of the DC/DC converter circuit (1).

## Patentansprüche

1. Wechselrichter (12) mit einer Gleichstrom-/Gleichstrom-, DC/DC, Wandlerschaltung (1) zum Umwandeln einer Eingangsspannung, Vᵢₙ, mindestens eines Photovoltaikmoduls in eine Ausgangsspannung, Vₒᵤₜ, und einer DC/AC-Wandlerschaltung (14) zum Umwandeln der Ausgangsspannung, Vₒᵤₜ, in eine AC-Spannung, die einem Stromversorgungsnetz (13) zugeführt wird, wobei die DC/DC-Wandlerschaltung (1) umfasst:
- eine Eingangsseite zum Empfangen der Eingangsspannung, Vᵢₙ, von mindestens einem Photovoltaikmodul, das mit der Eingangsseite der DC/DC-Wandlerschaltung (1) verbindbar ist,
- eine Ausgangsseite zum Ausgeben der Ausgangsspannung, Vₒᵤₜ, an die DC/AC-Wandlerschaltung (14),
- eine Pulsweitenmodulations-, PWM, Steuerung (4), die dazu ausgelegt ist, ein PWM-Setzsignal bereitzustellen, das an ein Gate eines Halbleiterschalters (3) der DC/DC-Wandlerschaltung (1) angelegt wird, um ein Verhältnis zwischen der Ausgangsspannung, Vₒᵤₜ, und der Eingangsspannung, Vᵢₙ, zu steuern,
wobei die PWM-Steuerung (4) eine endliche Zustandsmaschine umfasst, und
- einen Überstromdetektor (5), der dazu ausgelegt ist, einen durch eine Komponente der DC/DC-Wandlerschaltung (1) fließenden Überstrom zu erfassen und das erfasste Überstromereignis, oce, an die PWM-Steuerung (4) zu melden, die dazu ausgelegt ist, den Halbleiterschalter (3) in einem Überstromzustand (II) der endlichen Zustandsmaschine der PWM-Steuerung (4) als Reaktion auf das gemeldete Überstromereignis, oce, in einen ausgeschalteten Zustand zu schalten, um einen Überstromschutz für die DC/DC-Wandlerschaltung (1) bereitzustellen,
wobei das Schalten des Halbleiterschalters (3) mit dem PWM-Setzsignal synchronisiert ist,
wobei nach Beendigung der Signalisierung des Überstromereignisses, oce, an die PWM-Steuerung (4) die PWM-Steuerung (4) so konfiguriert ist, dass sie den Halbleiterschalter (3) in einem Wartezustand (III) der endlichen Zustandsmaschine mit einer vordefinierten Wartezeit im ausgeschalteten Zustand hält, und
im Falle eines zulässigen 100 %-igen Tastverhältnisses des PWM-Setzsignals, wenn während der vordefinierten Wartezeit, die länger ist als ein von einem PWM-Setzsignalgenerator (4A) der PWM-Steuerung (4) erzeugter PWM-Setzsignalzyklus, keine Änderung des Zustands des PWM-Setzsignals auftritt, ist die endliche Zustandsmaschine der PWM-Steuerung (4) so konfiguriert, dass sie nach Ablauf der vordefinierten Wartezeit vom Wartezustand (III) in einen Normalzustand (I) der endlichen Zustandsmaschine wechselt,
ansonsten ist die PWM-Steuerung (4) so konfiguriert, dass sie den Halbleiterschalter (3) im Wartezustand (III) der endlichen Zustandsmaschine im ausgeschalteten Zustand hält, bis eine nächste Signalflanke des PWM-Signals auftritt.

2. Wechselrichter (12) nach Anspruch 1, wobei die PWM-Steuerung (4) einen Timer umfasst, der dazu ausgelegt ist, zu messen, ob die vordefinierte Wartezeit nach dem Überstromereignis, oce, abgelaufen ist.

3. Wechselrichter (12) nach Anspruch 1 oder 2, wobei die PWM-Steuerung (4) ferner einen Überstromereigniszähler umfasst, der dazu ausgelegt ist, eine Anzahl von Überstromereignissen, oce, zu zählen, die von dem Überstromdetektor (5) an die PWM-Steuerung (4) gemeldet werden.

4. Wechselrichter (12) nach Anspruch 3, wobei die PWM-Steuerung (4) dazu ausgelegt ist, automatisch eine Fehlerbehandlungsprozedur auszulösen, wenn die Anzahl der vom Überstromereigniszähler gezählten Überstromereignisse, oce, einen vordefinierten Schwellenwert erreicht.

5. Wechselrichter (12) nach Anspruch 3 oder Anspruch 4, wobei der Überstromereigniszähler so konfiguriert ist, dass er nach einer vordefinierten Zeitspanne zurückgesetzt oder dekrementiert wird.

6. Wechselrichter (12) nach einem der vorstehenden Ansprüche 1 bis 5, wobei der Überstromdetektor (5) einen Komparator umfasst, der so konfiguriert ist, dass er das Überstromereignis, oce, signalisiert, wenn ein gemessener Strom, der durch die Komponente der DC/DC-Wandlerschaltung (1) fließt, einen vordefinierten Referenzwert überschreitet.

7. Wechselrichter (12) nach einem der vorstehenden Ansprüche 1 bis 6, wobei die DC/DC-Wandlerschaltung (1) umfasst
eine analoge Schaltung (2), die als Komponente eine Spule (9) umfasst, durch die ein Strom fließt und gemessen wird, um ein Überstromereignis, oce, zu erkennen,
einen Eingangskondensator (7) auf der Eingangsseite des DC/DC-Wandlers und
einen Ausgangskondensator (8) auf der Ausgangsseite des DC/DC-Wandlers.

8. Wechselrichter (12) nach Anspruch 7, wobei die Komponente der analogen Schaltung (2) die Spule (9) umfasst,
wobei der Eingangskondensator (7) und der Ausgangskondensator (8) der analogen Schaltung (2) der DC/DC-Wandlerschaltung (1) über die Spule (9) und eine Diode (10) verbunden sind.

9. Wechselrichter (12) nach einem der vorstehenden Ansprüche 1 bis 8, wobei die endliche Zustandsmaschine so implementiert ist, dass
im Normalzustand (I) der endlichen Zustandsmaschine das erzeugte PWM-Setzsignal von der PWM-Steuerung (4) an das Gate des Halbleiterschalters (3) angelegt wird, und
in einem Überstromzustand (II) der endlichen Zustandsmaschine der Halbleiterschalter (3) durch die PWM-Steuerung (4) in den ausgeschalteten Zustand geschaltet wird, um einen Überstromschutz bereitzustellen.

10. Wechselrichter (12) nach Anspruch 9, wobei eine Anzahl von Übergängen (T) zwischen Zuständen (I, II, III) der endlichen Zustandsmaschine der PWM-Steuerung (4) durch Inkrementieren eines Zustandsänderungszählers gezählt wird und die PWM-Steuerung (4) so konfiguriert ist, dass sie eine Fehlerbehandlungsprozedur auslöst, wenn der Wert des endlichen Zustandsänderungszählers einen vordefinierten Schwellenwert überschreitet.

11. Wechselrichter (12) nach Anspruch 10, wobei der Zustandsänderungszähler der PWM-Steuerung (4) so konfiguriert ist, dass sie nach einer vordefinierten Zeitspanne zurückgesetzt oder dekrementiert wird.

12. Wechselrichter (12) nach einem der vorstehenden Ansprüche, wobei die DC/DC-Wandlerschaltung (1) eine Stoßspannungsprüfungsfeste DC/DC-Wandlerschaltung (1) zum Umwandeln der Eingangsspannung, Vᵢₙ, in die Ausgangsspannung, Vₒᵤₜ, ist,
wobei der Überstromdetektor (5) dazu ausgelegt ist, einen durch eine Komponente der DC/DC-Wandlerschaltung (1) fließenden Überstrom zu erfassen und das erfasste Überstromereignis, oce, an die PWM-Steuerung (4) zu melden, die so konfiguriert ist, dass sie den Halbleiterschalter (3) als Reaktion auf das gemeldete Überstromereignis, oce, in den ausgeschalteten Zustand schaltet, um einen Stoßspannungsprüfungsfesten Überstromschutz für die DC/DC-Wandlerschaltung (1) bereitzustellen, wobei alle Überstromereignisse, die durch Stoßspannungsimpulse während einer Stoßspannungsprüfung verursacht werden, unterdrückt werden, ohne den Überstromschutz der DC/DC-Wandlerschaltung (1) zu unterbrechen.

13. Verfahren zum Bereitstellen eines Stoßspannungsprüfungsfesten Überstromschutzes für einen Wechselrichter (12) gemäß einem der vorstehenden Ansprüche, umfassend die DC/DC-Wandlerschaltung (1), die eine Eingangsspannung, Vᵢₙ, mindestens eines Photovoltaikmoduls in eine Ausgangsspannung, Vₒᵤₜ, umwandelt, wobei die DC/AC-Wandlerschaltung (14) die Ausgangsspannung, Vₒᵤₜ, in eine AC-Spannung umwandelt, die einem Stromversorgungsnetz (13) zuzuführen ist,
wobei das Verfahren die folgenden Schritte umfasst:
- Erzeugen (S1) eines PWM-Setzsignals, das an ein Gate eines Halbleiterschalters (3) der DC/DC-Wandlerschaltung (1) angelegt wird, um ein Verhältnis zwischen der Ausgangsspannung, Vₒᵤₜ, die in eine AC-Spannung umgewandelt werden soll, die einem Stromversorgungsnetz (13) zugeführt wird, und der Eingangsspannung, Vᵢₙ, mindestens eines Photovoltaikmoduls zu steuern;
- Schalten (S2) des Halbleiterschalters (3) in einen ausgeschalteten Zustand in einem Überstromzustand (II) einer endlichen Zustandsmaschine, um einen Überstromschutz bereitzustellen, wenn ein Überstromereignis, oce, in der DC/DC-Wandlerschaltung (1) erkannt wird,
wobei das Schalten des Halbleiterschalters (3) mit dem erzeugten PWM-Setzsignal synchronisiert ist; und
- Halten (S3) des Halbleiterschalters (3) im ausgeschalteten Zustand in einem Wartezustand (III) der endlichen Zustandsmaschine mit einer vordefinierten Wartezeit, nachdem das Überstromereignis, oce, nicht mehr signalisiert wird,
wobei
im Falle eines zulässigen 100 %-igen Tastverhältnisses des PWM-Setzsignals, wenn während der vordefinierten Wartezeit, die länger ist als der PWM-Setzsignalzyklus des PWM-Setzsignals, keine Änderung des Zustands des PWM-Setzsignals auftritt, die endliche Zustandsmaschine nach Ablauf der vordefinierten Wartezeit vom Wartezustand (III) in einen Normalzustand (I) der endlichen Zustandsmaschine wechselt,
und
ansonsten der Halbleiterschalter (3) den Halbleiterschalter (3) im Wartezustand (III) der endlichen Zustandsmaschine im ausgeschalteten Zustand hält, bis eine nächste Signalflanke des erzeugten PWM-Setzsignals auftritt.

14. Verfahren nach Anspruch 13, wobei der Schritt des Schaltens (S2) des Halbleiterschalters (3) in den ausgeschalteten Zustand umfasst:
- Schalten (S2) des Halbleiterschalters (3) in den ausgeschalteten Zustand, um einen Überstromschutz bereitzustellen, wenn ein Überstromereignis, oce, in der DC/DC-Wandlerschaltung (1) von einem Überstromdetektor (5) erkannt wird, um einen Stoßspannungsprüfungsfesten Überstromschutz für die DC/DC-Wandlerschaltung (1) bereitzustellen, wobei alle Überstromereignisse, die während einer Stoßspannungsprüfung durch Stoßspannungsimpulse verursacht werden, unterdrückt werden, ohne den Überstromschutz der DC/DC-Wandlerschaltung (1) zu unterbrechen.

## Revendications

1. Onduleur (12) comprenant un circuit convertisseur courant continu/courant continu, DC/DC, (1) pour convertir une tension d'entrée, Vᵢₙ, d'au moins un module photovoltaïque en une tension de sortie, Vₒᵤₜ, et un circuit convertisseur courant continu/courant alternatif, DC/AC, (14) adapté pour convertir la tension de sortie, Vₒᵤₜ, en une tension AC délivrée à un réseau d'alimentation électrique (13), ledit circuit convertisseur DC/DC (1) comprenant :
- un côté d'entrée pour recevoir la tension d'entrée, Vᵢₙ, provenant d'au moins un module photovoltaïque pouvant être connecté au côté d'entrée dudit circuit convertisseur DC/DC (1),
- un côté de sortie, pour délivrer la tension de sortie, Vₒᵤₜ, au circuit convertisseur DC/AC (14),
- une commande de modulation de largeur d'impulsion, PWM, (4) adaptée pour fournir un signal de consigne PWM appliqué à une grille d'un commutateur à semi-conducteur (3) dudit circuit convertisseur DC/DC (1) pour commander un rapport entre la tension de sortie, Vₒᵤₜ, et la tension d'entrée, Vᵢₙ,
la commande PWM (4) comprenant un automate fini et
- un détecteur de surintensité (5) adapté pour détecter une surintensité circulant à travers un composant du circuit convertisseur DC/DC (1) et pour signaler l'événement de surintensité, oce, détecté à la commande PWM (4) qui est adaptée pour basculer le commutateur à semi-conducteur (3) à un état hors tension dans un état de surintensité (II) de l'automate fini de la commande PWM (4) en réaction à l'événement de surintensité, oce, signalé afin d'assurer une protection contre les surintensités pour le circuit convertisseur DC/DC (1),
dans lequel le basculement du commutateur à semi-conducteur (3) est synchronisé avec le signal de consigne PWM,
dans lequel, après l'arrêt du signalement de l'événement de surintensité, oce, à la commande PWM (4), la commande PWM (4) est configurée pour maintenir le commutateur à semi-conducteur (3) à l'état hors tension dans un état d'attente (III) de l'automate fini avec une période d'attente prédéfinie, et
dans le cas où un cycle de service de 100 % du signal de consigne PWM est admissible, lorsqu'aucun changement de l'état du signal de consigne PWM ne se produit pendant la période d'attente prédéfinie, qui est plus longue qu'un cycle de signal de consigne PWM généré par un générateur de signal de consigne PWM (4A) de la commande PWM (4), l'automate fini de la commande PWM (4) est configuré pour passer de l'état d'attente (III) à un état normal (I) de l'automate fini, après l'expiration de la période d'attente prédéfinie,
sinon, la commande PWM (4) est configurée pour maintenir le commutateur à semi-conducteur (3) à l'état hors tension dans l'état d'attente (III) de l'automate fini jusqu'à ce qu'un front de signal suivant du signal PWM apparaisse.

2. Onduleur (12) selon la revendication 1, dans lequel la commande PWM (4) comprend une temporisation adaptée pour mesurer si la période d'attente prédéfinie après l'événement de surintensité, oce, a expiré.

3. Onduleur (12) selon la revendication 1 ou 2, dans lequel la commande PWM (4) comprend en outre un compteur d'événements de surintensité adapté pour compter un nombre d'événements de surintensité, oce, signalés par le détecteur de surintensité (5) à la commande PWM (4).

4. Onduleur (12) selon la revendication 3, dans lequel la commande PWM (4) est adaptée pour déclencher automatiquement une procédure de gestion de défaillances si le nombre d'événements de surintensité, oce, comptés par le compteur d'événements de surintensité atteint une valeur de seuil prédéfinie.

5. Onduleur (12) selon la revendication 3 ou la revendication 4, dans lequel le compteur d'événements de surintensité est configuré pour être réinitialisé ou décrémenté après une période de temps prédéfinie.

6. Onduleur (12) selon l'une quelconque des revendications 1 à 5 précédentes, dans lequel le détecteur de surintensité (5) comprend un comparateur qui est configuré pour signaler l'événement de surintensité, oce, si un courant mesuré circulant à travers le composant du circuit convertisseur DC/DC (1) dépasse une valeur de référence prédéfinie.

7. Onduleur (12) selon l'une quelconque des revendications 1 à 6 précédentes, dans lequel le circuit convertisseur DC/DC (1) comprend
des circuits analogiques (2) comprenant, en tant que composant, une bobine (9) à travers laquelle un courant circule et est mesuré pour détecter un événement de surintensité, oce,
un condensateur d'entrée (7) du côté d'entrée du convertisseur DC/DC et
un condensateur de sortie (8) du côté de sortie du convertisseur DC/DC.

8. Onduleur (12) selon la revendication 7, dans lequel le composant des circuits analogiques (2) comprend la bobine (9),
dans lequel le condensateur d'entrée (7) et le condensateur de sortie (8) des circuits analogiques (2) du circuit convertisseur DC/DC (1) sont connectés par l'intermédiaire de la bobine (9) et d'une diode (10).

9. Onduleur (12) selon l'une quelconque des revendications 1 à 8 précédentes, dans lequel l'automate fini est mis en œuvre de telle sorte que,
dans l'état normal (I) de l'automate fini, le signal de consigne PWM généré est appliqué par la commande PWM (4) à la grille du commutateur à semi-conducteur (3), et
dans un état de surintensité (II) de l'automate fini, le commutateur à semi-conducteur (3) est basculé à l'état hors tension par la commande PWM (4) pour assurer une protection contre les surintensités.

10. Onduleur (12) selon la revendication 9, dans lequel un nombre de transitions (T) entre les états (I, II, III) de l'automate fini de la commande PWM (4) est compté en incrémentant un compteur de changement d'état et la commande PWM (4) est configurée pour déclencher une procédure de gestion de défaillances si la valeur du compteur de changement d'état fini dépasse une valeur de seuil prédéfinie.

11. Onduleur (12) selon la revendication 10, dans lequel le compteur de changement d'état de la commande PWM (4) est configuré pour être réinitialisé ou décrémenté après une période de temps prédéfinie.

12. Onduleur (12) selon l'une quelconque des revendications précédentes, dans lequel le circuit convertisseur DC/DC (1) est un circuit convertisseur DC/DC tolérant à l'essai de tension de choc (1) pour convertir la tension d'entrée V_{In} en tension de sortie Vₒᵤₜ,
dans lequel le détecteur de surintensité (5) est adapté pour détecter une surintensité circulant à travers un composant du circuit convertisseur DC/DC (1) et pour signaler l'événement de surintensité, oce, détecté à la commande PWM (4) qui est configurée pour basculer le commutateur à semi-conducteur (3) à l'état hors tension en réaction à l'événement de surintensité, oce, signalé afin d'assurer une protection contre les surintensités résiliente à l'essai de tension de choc pour le circuit convertisseur DC/DC (1), où tout événement de surintensité provoqué à cause de'impulsions de tension de choc pendant un essai de tension de choc sont supprimées sans interrompre la protection contre les surintensités du circuit convertisseur DC/DC (1).

13. Procédé pour assurer une protection contre les surintensités résiliente à l'essai de tension de choc pour un onduleur (12) selon l'une quelconque des revendications précédentes, comprenant le circuit convertisseur DC/DC (1) qui convertit une tension d'entrée, V_{In}, d'au moins un module photovoltaïque en une tension de sortie, Vₒᵤₜ, dans lequel le circuit convertisseur DC/AC (14) convertit la tension de sortie, Vₒᵤₜ, en une tension AC à délivrer à un réseau d'alimentation électrique (13),
le procédé comprenant les étapes consistant à :
- générer (S1) un signal de consigne PWM appliqué à une grille d'un commutateur à semi-conducteur (3) dudit circuit convertisseur DC/DC (1) pour commander un rapport entre la tension de sortie, Vₒᵤₜ, à convertir en une tension AC à délivrer à un réseau d'alimentation électrique (13) et la tension d'entrée, Vᵢₙ, d'au moins un module photovoltaïque ;
- basculer (S2) le commutateur à semi-conducteur (3) à un état hors tension dans un état de surintensité (II) d'un automate fini pour assurer une protection contre les surintensités si un événement de surintensité, oce, dans le circuit convertisseur DC/DC (1) est détecté,
dans lequel le basculement du commutateur à semi-conducteur (3) est synchronisé avec le signal de consigne PWM généré ; et
- maintenir (S3) le commutateur à semi-conducteur (3) à l'état hors tension dans un état d'attente (III) de l'automate fini avec une période d'attente prédéfinie après l'arrêt du signalement de l'événement de surintensité, oce,
dans lequel
dans un cas où un cycle de service de 100 % du signal de consigne PWM est admissible, lorsqu'aucun changement de l'état du signal de consigne PWM ne se produit pendant la période d'attente prédéfinie, qui est plus longue qu'un cycle de signal de consigne PWM du signal de consigne PWM, l'automate fini passe de l'état d'attente (III) à un état normal (I) de l'automate fini, après l'expiration de la période d'attente prédéfinie, et
sinon, le commutateur à semi-conducteur (3) maintient le commutateur à semi-conducteur (3) à l'état hors tension dans l'état d'attente (III) de l'automate fini jusqu'à ce qu'un front de signal suivant du signal de consigne PWM généré se produise.

14. Procédé selon la revendication 13, dans lequel l'étape de basculement (S2) du commutateur à semi-conducteur (3) à l'état bloqué comprend de :
- basculer (S2) le commutateur à semi-conducteur (3) à l'état hors tension pour assurer une protection contre les surintensités si un événement de surintensité, oce, dans le circuit convertisseur DC/DC (1) est détecté par un détecteur de surintensité (5) pour assurer une protection contre les surintensités résiliente à l'essai de tension de choc pour le circuit convertisseur DC/DC (1), où tout événement de surintensité provoqué à cause d'impulsions de tension de choc pendant un essai de tension de choc est supprimé sans interrompre la protection contre les surintensités du circuit convertisseur DC/DC (1).
